**Europäisches Patentamt**

**European Patent Office**

**Office européen des brevets**

(19)

(11) Veröffentlichungsnummer: **0 291 058 B1**

(12) EUROPÄISCHE PATENTSCHRIFT

(45) Veröffentlichungstag der Patentschrift:
06.03.91 Patentblatt 91/10

(51) Int. Cl.⁵: **F16B 12/20, E04B 2/74**

(21) Anmeldenummer: 88107641.8

(22) Anmeldetag: 11.05.88

(54) **Bausystem zur Zusammensetzung von Möbeln, Behältern, Stellwänden od.dgl.**

(30) Priorität: 14.05.87 DE 8706941 U

(43) Veröffentlichungstag der Anmeldung:
17.11.88 Patentblatt 88/46

(45) Bekanntmachung des Hinweises auf die
Patenterteilung:
06.03.91 Patentblatt 91/10

(84) Benannte Vertragsstaaten:
AT BE CH DE ES FR GB IT LI LU NL SE

(56) Entgegenhaltungen:
EP-A- 0 134 639
DE-A- 2 329 016
FR-A- 2 579 689
US-A- 3 659 389

(73) Patentinhaber: MAMOUTH COMIX LTD.
Ippokratous 44
GR-10680 Athen (GR)

(72) Erfinder: Scourtelis, Nicolas
Dafnis 5 d Ekali Attikis
GR-14565 Athen (GR)

(74) Vertreter: Glaeser, Joachim, Dipl.-Ing. et al
Patentanwalt Königstrasse 28
W-2000 Hamburg 50 (DE)

## Beschreibung

Die Erfindung bezieht sich auf ein Bausystem zur Zusammensetzung von Möbeln, Behältern, Stellwänden od. dgl., umfassend vieleckige Plattenelemente und Klammerelemente zwecks flächiger oder räumlicher Verbindung einzelner Plattenelemente.

Ein solches Bansystem ist bekannt aus der FR-A-2579689, insbes. den Fig. 4 und 5.

Die Erfindung befaßt sich mit dem Problem, Möbel, Behälter, Stellwände und dgl. aus Einzelementen so zusammensetzen zu können, daß nicht allein flächige sondern auch räumliche Gebilde mit verhältnismäßig einfachen Mitteln erstellt werden können.

Erreicht wird dies durch die im Anspruch angegebenen Merkmale.

Die Plattenelemente sind vorzugsweise in ihrer Draufsicht rechteckig oder quadratisch ausgebildet. Sie bestehen aus einem die Kanten umgebenden Rand, welcher an bestimmten Stellen unterbrochen ausgebildet ist. Die auf diese Art und Weise gebildeten Ausnehmungen enthalten einen Stab, der im wesentlichen in der geometrischen Mitte der Ausnehmungen angeordnet ist. Das Klammerelement hat die Form eines Bügels, der zwei einander benachbarte Stäbe nebeneinander angeordneter Plattenelemente so umgreifen kann, daß über die Klammer die beiden Teile in einer bestimmten räumlichen Lage zueinander festgelegt sind. Die Ausnehmungen selbst sind nach der Erfindung dabei so groß gewählt, daß nebeneinander mehrere derartige Bügel eingesetzt werden können, so daß an einer Verbindungsstelle mehr als zwei Platten, beispielsweise drei oder gar vier, in Winkellage zueinander festgelegt werden können.

Der Bügel gemäß der Erfindung kann federnde Eigenschaften haben, so daß er mit einer gewissen Kraft über die Stäbe geschoben werden kann, so daß diese nicht ohne weiteres voneinander getrennt werden können.

Sowohl für die Platten als auch für die Klammern kommen als Material Kunststoffe in Frage, andere Materialien sind ebenfalls geeignet.

Die Plattenelemente können in ihrem inneren Bereich in bezug auf die Ränder offen sein, sie können Vorkehrungen besitzen, daß die Öffnung mit Hilfe geeigneter Teile lösbar verschlossen werden kann.

Mit dem System gemäß der Erfindung können kastenförmige Hohlkörper gebildet werden, es können Tische hergestellt werden, deren Seiten offen ausgebildet sind. Weiterhin können Regale erstellt werden. Die Ausbildung von Stellwänden oder Messeständen ist in entsprechender Weise möglich.

Gemäß der Erfindung können die hergestellten Verbindungen leicht gelöst werden, so daß die Elemente in geringem Raum verpackt und transportiert werden können.

Die Erfindung wird nachstehend an Hand der Zeichnung beispielsweise erläutert.

Fig. 1 zeigt eine Draufsicht auf einen Teil eines Plattenelementes.

Fig. 2 zeigt die entsprechende Seitenansicht.

Fig. 3 zeigt eine Vorderansicht auf ein Klammerelement.

Mit 10 ist ein plattenförmiges Element bezeichnet, welches im wesentlichen rechteckig ausgebildet ist. Die eine Seitenlänge beträgt $L_1$, die andere $L_2$, wobei $L_1$ und $L_2$ zueinander gleich groß sein können.

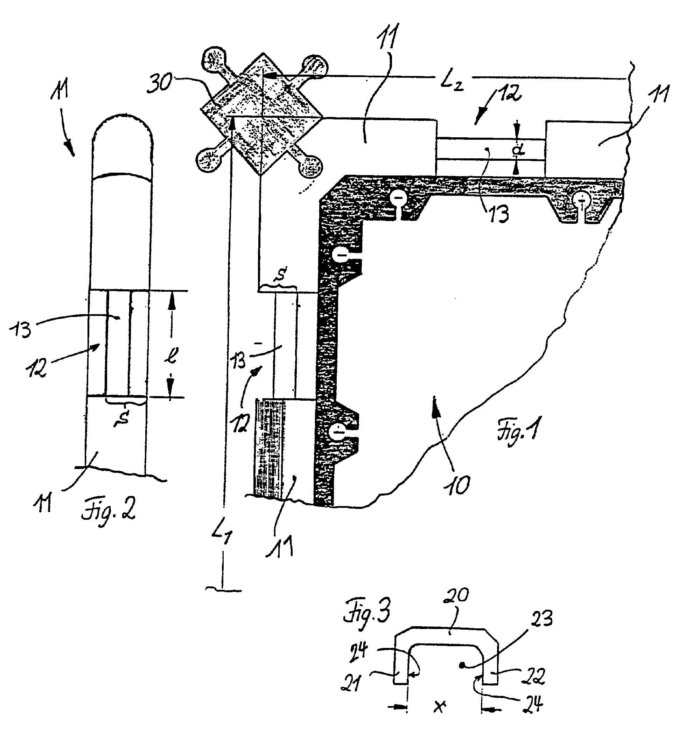

Mit 11 sind die Ränder des Plattenelementes 10 bezeichnet, diese umgeben ein Vieleck bildend das gesamte Plattenelement 10. In der bevorzugten Ausführungsform sind die Außenränder der Randteile 11 abgerundet ausgebildet, wie dies oben in Fig. 2 zu erkennen ist. In bestimmten einander entsprechenden Abständen untereinander und vom Rand der Plattenelemente 10 sind Ausnehmungen 12 mit der Länge 1 vorgesehen. In den Figuren sind insgesamt nur zwei derartige Ausnehmungen zu erkennen, die Anzahl der Ausnehmungen, die für eine praktische Ausführungsform erforderlich sind, hängt von der Länge der Plattenelemente und von der gewünschten Festigkeit der Verbindung ab.

Mittig in den Ausnehmungen 12 sind Stäbe 13 vorgesehen, die vorzugsweise Kreisquerschnitt haben, wobei der Durchmesser d beträgt.

Die Stäbe 13 sind nun so angeordnet, daß sie zu den äußeren Erstreckungen der Plattenelemente bzw. der Ränder 11 einen Abstand s haben, gemessen zur gegenüberliegenden Erstreckung des Stabes 13, so wie dies in Fig. 1 und Fig. 2 zu erkennen ist.

Fig. 3 zeigt einen Bügel 20 als Klammerelement. Der Bügel 20 weist zwei gabelförmig vorstehende Erstreckungen 21 und 22 auf, welche zueinander einen Abstand x haben, so wie dies in Fig. 3 angegeben ist. Der gebildete Innenraum 23 ist so groß bemessen, daß zwei nebeneinander zuliegenkommende Stäbe 13 benachbarter Ausnehmungen 12 in diesen Innenraum hineinpassen können. Damit eine Klemm- oder Rastverbindung erzeugt wird, können die Vorsprünge 21 und 22 ihrerseits mit hintergreifenden Teilen 24 versehen sein. Es ist auch möglich, die Abmessung x etwas kleiner als zwei s zu bemessen, so daß auf diese Art und Weise eine Klemmverbindung entsteht.

Die Bügel 20 haben eine Tiefenerstreckung (bei Betrachtung der Fig. 3), welche die Hälfte der Länge 1, ein Drittel oder ein Viertel der Länge 1 beträgt. Auf diese Art und Weise können mehrere Bügel 20 in eine Ausnehmung 12 eingesetzt werden.

In der Fig. 1 sind im inneren Teil des plattenförmigen Elementes 10 Befestigungsmittel gezeigt, welche dazu dienen können, eine Tafel an der Platte 10 zu befestigen, so daß von den Rändern 11 gebildet Öffnung abgedeckt werden kann.

Weiterhin ist in Fig. 1 im linken oberen Teil eine Ausnehmung in der Ecke des Randteils 11 gezeigt, welche ebenfalls für weitere Befestigungsmittel gedacht ist. Mit 30 ist ein Paßstück bezeichnet, dessen vier Vorsprünge in entsprechende Ausnehmungen nebeneinander angeordneter Plattenelemente 10 passen, um eine feste Steckverbindung der Plattenelemente sicherzustellen.

## Ansprüche

1. Bausystem zur Zusammensetzung von Möbeln, Behältern, Stellwänden od. dgl., umfassend vieleckige Plattenelemente und Klammerelemente zwecks flächiger oder räumlicher Verbindung einzelner Plattenelemente, derart, daß jedes der Plattenelemente (10) an seinen Rändern (11) mit einer Mehrzahl von Randausnehmungen (12) ausgebildet ist, daß in jeder Ausnehmung (12) ein sich zum Rand im wesentlichen gleichgerichtet erstreckender Stab (13) angeordnet ist, daß jedes der Klammerelemente als Bügel (20) ausgebildet ist, der in die Ausnehmungen benachbart angeordneter Plattenelemente (10) einsetzbar ist und deren Stäbe (13) zum Teil umgreifend, vorzugsweise mit diesen eine Rastverbindung eingehend, ausgebildet ist dadurch gekennzeichnet daß die Bügel (20) eine Tiefenerstrechung haben, welche der Hälfte, einem Drittel od. ein Viertel der Länge der Ausnehmung (12) entspricht.

## Claims

1. System for assembling furniture, containers, partitions or the like, comprising multiangular plate elements and bracing elements for the purpose of areally or spatially connecting individual plate elements in a manner that the edges (11) of each plate elements (10) are provided with a plurality of recesses (12), that in each recess (12) there is disposed a bar (13) extending substantially in equal direction as the rim, that each of the bracing elements is designed as a clamp (20), which can be inserted in the recesses of adjacent plate elements (10) and partly embracing their bars (13), preferably forming a lock connection, characterized in that the clamps (20) extend to a depth corresponding to half, one third or one fourth of the length of the recess (12).

## Revendications

1. Système de montage destiné à l'assemblage de meubles, de boîtes, de cloisons ou similaires, comprenant des éléments en plaque polygonaux et des éléments de serrage destinés à une liaison dans un plan ou dans l'espace d'éléments en plaque individuels, de telle manière que chacun des éléments en plaque (10) comporte sur ses bords (11) plusieurs évidements latéraux (12), que dans chaque évidement (12) est disposée une barre (13) orientée sensiblement parallèlement au bord, que chacun des éléments de serrage a la forme d'un étrier (20) insérable dans les évidements d'éléments en plaques (10) disposés au voisinage l'un de l'autre, en entourant en partie leurs barreaux (13), de préférence en réalisant avec eux une liaison par encliquetage, caractérisé en ce que les étriers (20) ont, en profondeur, une dimension qui correspond à la moitié, au tiers ou au quart de la longueur de l'évidement (12).

Fig.1

Fig.2

Fig.3